# EUROPÄISCHE PATENTSCHRIFT

(11) **EP 2 780 204 B1**
(45) Veröffentlichungstag und Bekanntmachung des Hinweises auf die Patenterteilung: **20.04.2016**
(21) Anmeldenummer: 12770018.5
(22) Anmeldetag: 18.09.2012
(51) Int. Cl.: B60T 13/52

(54) **VERFAHREN UND VORRICHTUNG ZUM ANSTEUERN EINER ELEKTRISCHEN VAKUUMPUMPE FÜR EINEN BREMSKRAFTVERSTÄRKER EINES FAHRZEUGS**
METHOD AND DEVICE FOR ACTIVATING AN ELECTRICAL VACUUM PUMP FOR A BRAKE BOOSTER OF A VEHICLE
PROCÉDÉ ET DISPOSITIF POUR COMMANDER UNE POMPE À VIDE ÉLECTRIQUE D'UN SERVOFREIN D'UN VÉHICULE À MOTEUR

(30) Priorität: 15.11.2011 DE 102011086340
(43) Veröffentlichungstag der Anmeldung: 24.09.2014
(73) Patentinhaber: Robert Bosch GmbH, 70442 Stuttgart (DE)
(72) Erfinder: BRUEX, Thomas, 71720 Oberstenfeld (DE)
(86) Internationale Anmeldenummer: PCT/EP2012/068351
(87) Internationale Veröffentlichungsnummer: WO 2013/072103

(56) Entgegenhaltungen:
- DE-A1-102009 046 006
- US-A1- 2004 162 652

## Beschreibung

### GEBIET DER ERFINDUNG

Die vorliegende Erfindung betrifft ein Verfahren sowie eine Vorrichtung zum Ansteuern einer elektrischen Vakuumpumpe für einen Bremskraftverstärker eines Fahrzeugs. Die Anmeldung betrifft ferner ein Computerprogrammprodukt mit maschinenlesbarem Code sowie ein computerlesbares Medium mit einem darauf gespeicherten Computerprogrammprodukt, wobei der maschinenlesbare Code eine Maschine dazu ansteuert, das erfindungsgemäße Verfahren durchzuführen.

### STAND DER TECHNIK

In modernen Kraftfahrzeugen wird der Fahrer beim Bremsen typischerweise durch einen Bremskraftverstärker unterstützt. Der Bremskraftverstärker ermöglicht eine Verringerung einer Betätigungskraft an der Bremse des Kraftfahrzeugs, die zum Erreichen einer erwünschten Bremswirkung benötigt wird. Insbesondere bei Personenkraftwagen und leichten Nutzfahrzeugen werden meist Unterdruck-Bremskraftverstärker eingesetzt, die ihre Energie aus einem Unterdruck, das heißt, einer Druckdifferenz zwischen einem Atmosphärendruck und einem in einem Vakuumreservoir herrschenden Gasdruck, beziehen.

Es wird darauf hingewiesen, dass im Rahmen dieser Beschreibung unter dem Unterdruck der Betrag der Differenz des Atmosphärendrucks, der hierin mit 1013 hPa angenommen wird, und dem in dem Vakuumreservoir herrschenden Druck, der im Betrieb typischerweise kleiner oder gleich 1013 hPa ist, verstanden wird, das heißt, dass der Unterdruck mit positivem Vorzeichen angenommen wird.

Der in dem Vakuumreservoir herrschende Unterdruck kann auf unterschiedliche Weise erzeugt werden. Herkömmlich wird der Unterdruck meist an einer Drosselklappe im Ansaugrohr eines Verbrennungsmotors abgegriffen. Die Stärke des erzeugten Unterdrucks hängt dabei vom Betriebszustand des Verbrennungsmotors ab. Alternativ kann eine mechanische Vakuumpumpe oder eine elektrische Vakuumpumpe den benötigten Unterdruck erzeugen. Die Verwendung einer elektrischen Vakuumpumpe hat hierbei den Vorteil, dass der Unterdruck unabhängig vom Zustand des Verbrennungsmotors erzeugt werden kann. Dies kann vor allem bei Fahrzeugen mit einer sogenannten Start-Stopp-Funktion oder bei Hybridfahrzeugen wichtig sein. Bei Elektrofahrzeugen ist die Verwendung einer elektrischen Vakuumpumpe derzeit die einzige praktische Option zur Erzeugung des Unterdrucks für den Bremskraftverstärker.

Allerdings unterscheiden sich die Eigenschaften und der zeitliche Verlauf der Unterdruckerzeugung bei einer elektrischen Vakuumpumpe von denjenigen bei mechanischen Vakuumpumpen oder einem Saugrohrvakuum. Während eine mechanische Vakuumpumpe kontinuierlich Unterdruck erzeugt und ein Saugrohrvakuum hauptsächlich bei der Betätigung bzw. beim Lösen eines Gaspedals des Kraftfahrzeugs aufgebaut wird, ist die Ansteuerung einer elektrischen Vakuumpumpe typischerweise mit Hilfe eines Reglers ausgeführt.

Beispielsweise wird in der DE 10 2009 046 006 A1 unter anderem ein Verfahren zur Funktionsüberwachung einer elektrischen Vakuumpumpe in einem Bremssystem beschrieben. Die Vakuumpumpe wird dabei im Betrieb zwischen einem Einschaltdruck, der eine erste Druckschwelle darstellt, und einem Ausschaltdruck, der eine zweite Druckschwelle bezeichnet, betätigt. Somit beginnt die elektrische Vakuumpumpe mit der Erzeugung des Unterdrucks für den Bremskraftverstärker erst, wenn der in dem Vakuumreservoir herrschende Unterdruck eine definierte Einschaltschwelle erreicht. Dies geschieht hauptsächlich bei Betätigung bzw. beim Lösen der Bremse.

Es wurde beobachtet, dass es bei einer Verwendung von derart geregelten elektrischen Vakuumpumpen für das Bremskraftverstärkersystem zu einer Beeinträchtigung des Fahrkomforts bzw. zu einer Irritierung des Fahrers beim Betätigen der Bremse kommen kann.

### OFFENBARUNG DER ERFINDUNG

Das hier vorgeschlagene Verfahren bzw. die vorgeschlagene Vorrichtung zum Ansteuern einer elektrischen Vakuumpumpe für einen Bremskraftverstärker eines Fahrzeugs ermöglicht einen erhöhten Fahrkomfort und verringert bzw. vermeidet Irritationen beim Fahrer während einer Betätigung einer Fahrzeugbremse.

Ideen zu Ausführungsformen der vorliegenden Erfindung basieren unter anderem auf den folgenden Erkenntnissen: Bei einer Fahrzeugbremse, bei der eine vom Fahrer bewirkte Bremskraft durch einen Bremskraftverstärker unterstützt wird, dessen versorgender Unterdruck mit Hilfe einer elektrischen Vakuumpumpe erzeugt wird, kann es beim Einschalten der elektrischen Vakuumpumpe zu einer deutlich spürbaren Veränderung des Bremspedalgefühls kommen. Durch den Aufbau des Unterdrucks in dem Vakuumreservoir des Bremskraftverstärkers wird die vom Bremskraftverstärker bewirkte Kraft erhöht. Dies kann dazu führen, dass sich das Bremspedal plötzlich als leicht zu betätigen anfühlt bzw. bei konstanter Fußkraft das Bremspedal sich weiter in Richtung einer Spritzwand des Kraftfahrzeugs bewegt. Beide Effekte können einen Fahrer während eines Bremsvorgangs irritieren.

Es werden daher Maßnahmen vorgeschlagen, um eine plötzliche Veränderung der Unterstützungswirkung des Bremskraftverstärkers während eines Bremsvorgangs, ausgelöst durch das Einschalten der elektrischen Vakuumpumpe, zu vermeiden oder zumindest eine Häufigkeit des Auftretens solcher Veränderungen zu reduzieren. Gleichzeitig bleibt die gesetzlich geforderte, durch das Bremssystem zu erreichende Verzögerung des Kraftfahrzeugs sichergestellt.

Es wird hierzu vorgeschlagen, eine voraussichtliche Abnahme des Unterdrucks in dem Vakuumreservoir des Bremskraftverstärkers, wie sie aufgrund eines aktuellen Bremsvorgangs auftreten wird, abzuschätzen und temporär die Einschaltschwelle, unterhalb der die elektrische Vakuumpumpe eingeschaltet wird, zu reduzieren, falls der aktuell in dem Vakuumreservoir herrschende Unterdruck abzüglich der abgeschätzten voraussichtlichen Abnahme des Unterdrucks während des Bremsvorgangs größer ist als ein vorbestimmter Aussteuerpunktunterdruck des Bremssystems.

Mit anderen Worten wird ein Verfahren zum Ansteuern einer elektrischen Vakuumpumpe für einen Bremskraftverstärker vorgeschlagen, bei dem abgeschätzt wird, ob eine Bremsung bis zu einer geforderten Verzögerung möglich ist, ohne dass dabei der Aussteuerpunkt des Bremssystems erreicht wird. Reicht der in dem Vakuumreservoir aktuell herrschende Unterdruck aus, um die Bremsung durchzuführen, ohne den Aussteuerpunkt zu erreichen, wird die Einschaltschwelle für das Einschalten der elektrischen Vakuumpumpe temporär auf einen verringerten Wert verschoben. Dadurch kann erreicht werden, dass der in dem Vakuumreservoir herrschende Unterdruck im Verlauf des Bremsvorgangs nicht unter die derart reduzierte Einschaltschwelle absinkt und somit die elektrische Vakuumpumpe nicht während des Bremsvorgangs plötzlich eingeschaltet wird. Stattdessen kann die elektrische Vakuumpumpe nach dem Bremsvorgang, wenn der Fahrer das Bremspedal loslässt und somit eine Veränderung des Bremspedaldrucks nicht mehr wahrnimmt, eingeschaltet werden.

Reicht der aktuell herrschende Unterdruck in dem Vakuumreservoir voraussichtlich nicht mehr für den gesamten Bremsvorgang aus, wird die Einschaltschwelle nicht verändert und die elektrische Vakuumpumpe wird bei Erreichen der ursprünglich eingestellten Einschaltschwelle automatisch aktiviert.

Um abschätzen zu können, ob der aktuell in dem Vakuumreservoir herrschende Unterdruck abzüglich der zuvor abgeschätzten Abnahme des Unterdrucks während des Bremsvorgangs größer ist als ein vorbestimmter Aussteuerpunktunterdruck, das heißt, ob eine Bremsung bis zu einer geforderten Verzögerung möglich ist, ohne dass dabei der Aussteuerpunkt des von dem Bremskraftverstärker unterstützten Bremssystems erreicht wird, kann eine Druckdifferenz zwischen einem Zielbremsdruck und einem aktuellen Vorbremsdruck in dem Bremskraftverstärker ermittelt werden und anschließend basierend auf dieser ermittelten Druckdifferenz und dem aktuell herrschenden Unterdruck in dem Vakuumreservoir die Abnahme des Unterdrucks in dem Vakuumreservoir während des Bremsvorgangs abgeschätzt werden. Mit anderen Worten kann der zu erwartende Unterdruckverbrauch während des Bremsvorgangs auf Basis des aktuell herrschenden Unterdrucks in dem Vakuumreservoir und einer zu erzeugenden Vorbremsdruckdifferenz in dem Bremssystem abgeschätzt werden und mit dem notwendigen Unterdruck zur Erreichung eines maximalen Zielbremsdrucks vor dem Aussteuerpunkt verglichen werden.

In diesem Zusammenhang wird darauf hingewiesen, dass unter dem Aussteuerpunkt eines Bremskraft-verstärkten Bremssystems derjenige Punkt verstanden wird, bis zu dem maximal eine von einem Fahrer bewirkte Bremspedalkraft von dem Bremskraftverstärker verstärkt an die Bremsen weitergegeben wird. Oberhalb dieser Bremspedalkraft kann der Bremskraftverstärker nicht mehr unterstützend wirken und eine weiter erhöhte Bremspedalkraft wird unverstärkt an die Bremsen übertragen. Mit anderen Worten wird die Bremspedalkraft unterhalb des Aussteuerpunkts mit einem höheren Proportionalitätsfaktor an die Bremsen übertragen als oberhalb des Aussteuerpunktes. Der Aussteuerpunkt hängt dabei unter anderem vom Differenzdruck und damit vom verfügbaren Unterdruck im Vakuumreservoir ab. Unter dem Aussteuerpunktunterdruck wird somit derjenige Unterdruck in dem Vakuumreservoir verstanden, der notwendig ist, um einen bestimmten Vordruck im Aussteuerpunkt zu erreichen.

Die Abnahme des Unterdrucks in dem Vakuumreservoir kann mit Hilfe eines Kennfeldes, welches eine Unterdruckreduzierung in Abhängigkeit von der ermittelten Druckdifferenz zwischen dem Zielbremsdruck und einem aktuellen Vorbremsdruck in dem Bremskraftverstärker sowie in Abhängigkeit von dem aktuellen Differenzdruck in dem Bremskraftverstärker angibt, ermittelt werden.

Mit anderen Worten können die für ein bestimmtes Bremskraftverstärkersystem spezifischen Eigenschaften hinsichtlich der Abnahme des Unterdrucks in dem Vakuumreservoir vorab beispielsweise messtechnisch ermittelt werden und in einem Kennfeld hinterlegt werden. Während des Betriebs des Bremskraftverstärkersystems kann dann sowohl ein aktueller Vorbremsdruck in dem Bremskraftverstärker als auch ein maximal zu erzielender Zielbremsdruck bestimmt werden und diese Daten mit den in dem Kennfeld hinterlegten Daten verglichen werden, so dass hierdurch die voraussichtliche Abnahme des Unterdrucks in dem Vakuumreservoir während des aktuellen Bremsvorgangs bis zum Erreichen des angestrebten Zielbremsdrucks abgeschätzt werden kann. Ein Zielbremsdruck kann hierbei derjenige Bremsdruck sein, bei dem eine ausreichende Verzögerung des Kraftfahrzeugs erreicht wird.

Alternativ kann die Abnahme des Unterdrucks in dem Vakuumreservoir als proportional zu der ermittelten Druckdifferenz zwischen dem Zielbremsdruck und dem aktuellen Vorbremsdruck ermittelt werden. Anders ausgedrückt kann die abzuschätzende voraussichtliche Abnahme des Unterdrucks während des Bremsvorgangs durch einen unterdruckabhängigen Faktor, der einen Unterdruckverlust pro Druckdifferenz angibt, abgeschätzt werden.

Die beiden zuvor beschriebenen Möglichkeiten zur Abschätzung der Abnahme des Unterdrucks während des Bremsvorgangs lassen sich mit hoher Genauigkeit implementieren, erfordern jedoch zusätzlichen Applikationsaufwand.

Als weitere Alternative kann die Abnahme des Unterdrucks in dem Vakuumreservoir durch Extrapolation einer bereits gemessenen Unterdruckabnahme ermittelt werden. Dabei kann die bis zum Erreichen des aktuellen Vorbremsdruckes benötigte Abnahme des Unterdrucks in dem Vakuumreservoir gemessen werden und davon ausgehend extrapoliert werden, wie sich der Unterdruck in dem Vakuumreservoir weiter reduzieren wird bis zum Erreichen des Zielbremsdrucks. Im einfachsten Fall kann bei dieser Extrapolation eine lineare Abhängigkeit des Unterdrucks in dem Vakuumreservoir von dem Bremsdruck angenommen werden. Es können auch kompliziertere, genauere Abhängigkeiten zugrunde gelegt werden. Eine Abschätzung der voraussichtlichen Abnahme des Unterdrucks in dem Vakuumreservoir durch Extrapolation kann mit geringem Applikationsaufwand implementiert werden.

Stellt sich nach Abschätzen der voraussichtlichen Abnahme des Unterdrucks in dem Vakuumreservoir aufgrund eines aktuellen Bremsvorgangs heraus, dass der nach dem Bremsvorgang in dem Vakuumreservoir verbleibende Unterdruck größer ist als der Aussteuerpunktunterdruck, das heißt größer ist als der notwendige Unterdruck zum verstärkenden Betreiben des Bremskraftverstärkers, kann die Einschaltschwelle für die elektrische Vakuumpumpe temporär auf einen niedrigeren Wert reduziert werden. Beispielsweise kann die temporäre Reduzierung der Einschaltschwelle bis zur nächsten Durchführung des vorgeschlagenen Steuerverfahrens beibehalten werden und dann überprüft werden, ob die Einschaltschwelle weiterhin reduziert gehalten wird oder wieder auf einen vorbestimmten Standardwert erhöht wird. Das Ausmaß, um das die Einschaltschwelle reduziert wird, kann dabei vorbestimmt sein.

Alternativ kann das Ausmaß des temporären Reduzierens der Einschaltschwelle abhängig von der geschätzten voraussichtlichen Abnahme des Unterdrucks in dem Vakuumreservoir aufgrund eines aktuellen Bremsvorgangs und abhängig von dem aktuellen Unterdruck in dem Vakuumreservoir gewählt werden. Mit anderen Worten kann anstatt einer "Schwarz-Weiß"-Entscheidung, ob die Einschaltschwelle verschoben wird oder nicht, auch eine stufenweise oder kontinuierliche Reduzierung der Einschaltschwelle implementiert werden. Hierzu könnten dann verschiedene Zielbremsvordrücke definiert werden.

Zusätzlich zu dem zuvor beschriebenen Verfahren wird hierin auch eine Vorrichtung zum Ansteuern einer elektrischen Vakuumpumpe für einen Bremskraftverstärker eines Fahrzeugs beschrieben, die dazu ausgelegt ist, das zuvor dargelegte Verfahren durchzuführen. Eine solche Vorrichtung kann in Form eines Steuergeräts oder eines Regelgeräts in einem Kraftfahrzeug vorgesehen werden. Die Vorrichtung kann hierzu geeignete Schnittstellen aufweisen, um beispielsweise Signale über den aktuell herrschenden Unterdruck in dem Vakuumreservoir aufnehmen zu können. In der Vorrichtung können ferner geeignete Daten oder Kennfelder gespeichert sein, um anhand des signalisierten Unterdrucks mit Hilfe einer ebenfalls vorzusehenden Recheneinheit die voraussichtliche Abnahme des Unterdrucks während des Bremsvorgangs abschätzen zu können. Ferner steht die Vorrichtung derart mit der elektrischen Vakuumpumpe in Kommunikation, dass eine aktuell gewählte Einschaltschwelle, unterhalb derer die Vakuumpumpe aktiviert werden soll, vorgegeben werden kann.

Ergänzend wird auch ein Computerprogrammprodukt und ein computerlesbares Medium mit einem darauf gespeicherten solchen Computerprogrammprodukt vorgeschlagen, wobei das Computerprogrammprodukt maschinenlesbaren Code umfasst, der bei Ausführung auf einer entsprechenden Maschine diese dazu ansteuert, das oben beschriebene Verfahren durchzuführen. Das Computerprogrammprodukt kann in jeder beliebigen maschinenverständlichen Sprache verfasst sein. Das computerlesbare Medium kann sich unterschiedlicher technologischer Speicherverfahren bedienen.
Es wird darauf hingewiesen, dass mögliche Merkmale und Vorteile von Ausführungsformen der Erfindung hierin teilweise mit Bezug auf das vorgeschlagene Verfahren zum Ansteuern einer elektrischen Vakuumpumpe für einen Bremskraftverstärker und teilweise mit Bezug auf eine entsprechende Vorrichtung beschrieben sind. Ein Fachmann wird erkennen, dass die verschiedenen Merkmale beliebig miteinander kombiniert und von dem Verfahren auf die Vorrichtung bzw. umgekehrt übertragen werden können, um auf diese Weise zu weiteren Ausführungsformen und gegebenenfalls zu Synergieeffekten zu gelangen.

### KURZE BESCHREIBUNG DER ZEICHNUNGEN

Nachfolgend werden Ausführungsformen der Erfindung mit Bezug auf die beigefügten Zeichnungen in nicht einschränkender Weise beschrieben.
Fig. 1 zeigt ein Bremssystem für ein Fahrzeug mit einem Bremskraftverstärker und einer zugehörigen elektrischen Vakuumpumpe sowie einer Vorrichtung zum Ansteuern der Vakuumpumpe gemäß einer Ausführungsform der vorliegenden Erfindung.
Fig. 2 zeigt ein Flussdiagramm zum Veranschaulichen eines Verfahrens gemäß einer Ausführungsform der vorliegenden Erfindung.
Fig. 3 zeigt eine Kennlinie eines Bremssystems mit einem Bremskraftverstärker zur Veranschaulichung des Verfahrens gemäß einer Ausführungsform der vorliegenden Erfindung.

Die Figuren sind lediglich schematisch und nicht maßstabsgetreu.

### AUSFÜHRUNGSFORMEN DER ERFINDUNG

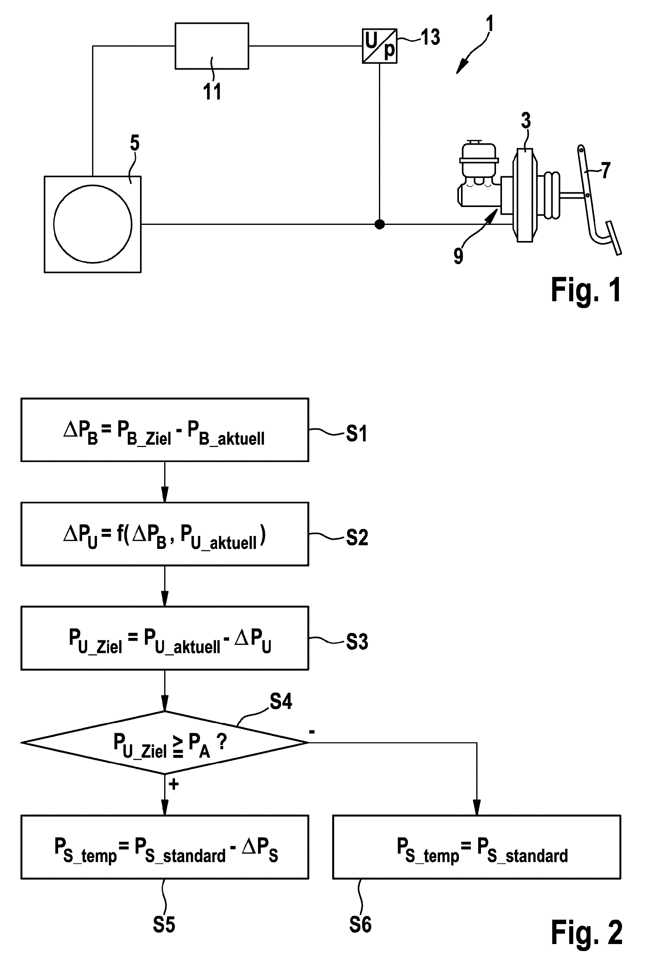

Fig. 1 zeigt Teile eines Bremssystems 1 für ein Kraftfahrzeug. Ein Bremspedal 7 betätigt einen Bremskraftverstärker 3, der eine von einem Fahrer auf das Bremspedal 7 ausgeübte Kraft verstärkt an die Bremsen des Fahrzeugs (nicht dargestellt) weitergibt. Der Bremskraftverstärker 3 weist ein Vakuumreservoir 9 auf, in dem mit Hilfe einer elektrischen Vakuumpumpe 5 ein Unterdruck von bis zu beispielsweise 1000 hPa erzeugt werden kann. Mit Hilfe dieses Unterdruckes aus dem Vakuumreservoir 9 kann eine in dem Bremskraftverstärker 3 vorgesehene Membran belastet werden und so die vom Bremspedal 7 ausgeübte Kraft verstärkt werden.

Ein Drucksensor 13 misst den aktuellen Unterdruck innerhalb des Vakuumreservoirs 9. Ein Steuergerät 11 dient zum Ansteuern der elektrischen Vakuumpumpe 5. Das Steuergerät 11 empfängt hierzu die Messdaten von dem Drucksensor 13 und kann basierend auf diesen Messdaten über den aktuell herrschenden Unterdruck in dem Vakuumreservoir 9 sowie basierend auf weiteren Informationen über den aktuellen Bremsvorgang und insbesondere über einen maximal durch das Bremssystem 1 zu bewirkenden Bremsdruck entscheiden, ob die elektrische Vakuumpumpe 5 aktiviert werden soll oder nicht bzw. wie eine Einschaltschwelle für die elektrische Vakuumpumpe 5 aktuell gewählt werden soll.

Fig. 2 zeigt ein Flussdiagramm, mit Hilfe dessen veranschaulicht wird, wie das Steuergerät 11 eine Einschaltschwelle für die Aktivierung der elektrischen Vakuumpumpe 5 beeinflussen kann.

Zunächst wird in einem Schritt S1 ein Zielbremsdruck P_{B_Ziel} und ein aktuell herrschender Vorbremsdruck P_{B_aktuell} bestimmt und ein Differenzwert ΔP_{B} dieser beiden Werte berechnet.

In einem Schritt S2 wird eine voraussichtliche Abnahme des Unterdrucks ΔP_{U} in dem Vakuumreservoir während des aktuellen Bremsvorgangs bestimmt. Dieser Wert ΔP_{U} wird dabei als Funktion f (ΔP_{B}, P_{U_aktuell}) der zuvor ermittelten Druckdifferenz AP_{B} zwischen dem Zielbremsdruck und dem aktuellen Vorbremsdruck sowie des aktuell in dem Vakuumreservoir herrschenden Unterdrucks P_{U_aktuell} ermittelt. Der funktionale Zusammenhang kann dabei beispielsweise aus einem zuvor abgelegten Kennfeld entnommen werden oder als proportional zu einer ermittelten Druckdifferenz zwischen Zielbremsdruck und aktuellem Vorbremsdruck ermittelt werden. Alternativ kann die Unterdruckabnahme durch Extrapolation einer zuvor gemessenen Unterdruckabnahme ermittelt werden.

Anschließend wird in einem Schritt S3 ein Unterdruckniveau P_{U_Ziel}, welches sich voraussichtlich bei Erreichen des Zielbremsdrucks einstellt, ermittelt, indem von dem aktuellen Unterdruck P_{U_aktuell} die zuvor abgeschätzte Unterdruckabnahme ΔP_{U} subtrahiert wird.

Im nachfolgenden Schritt S4 wird der Zielunterdruck P_{U_Ziel} mit einem Aussteuerpunktunterdruck P_{A} verglichen.

Sollte der Zielunterdruck P_{U_Ziel} größer oder gleich dem Aussteuerpunktunterdruck P_{A} sein, wird in einem Schritt S5 eine temporär einzustellende Einschaltschwelle P_{S_temp} auf einen Wert eingestellt, der um einen Differenzwert ΔP_{S} kleiner ist als eine Standardeinschaltschwelle P_{S_standard}. Mit anderen Worten wird die Einschaltschwelle temporär reduziert. Die Einschaltschwelle gibt dabei denjenigen Druckwert an, den der Unterdruck in dem Vakuumreservoir unterschreiten soll, bevor die elektrische Vakuumpumpe aktiviert werden soll.

Sollte der Zielunterdruck P_{U_Ziel} kleiner als der Aussteuerpunktunterdruck P_{A} sein, wird in einem Schritt S6 die temporär einzustellende Einschaltschwelle P_{S_temp} unverändert belassen bzw. auf den Standardwert P_{S_standard} gesetzt.

Das beschriebene Verfahren kann wiederholt von einem Steuergerät 11 ausgeführt werden. Beispielsweise kann das Verfahren in Zeitabständen von 0,02 s durchgeführt werden sodass die Einschaltschwelle in entsprechend kurzen Intervallen an aktuell herrschende Anforderungen bezüglich des von der Vakuumpumpe zu generierenden Unterdrucks angepasst wird.

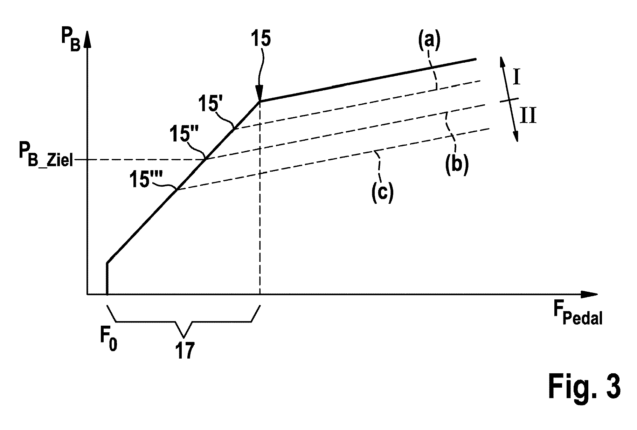

Mit Bezug auf Fig. 3 soll das vorgeschlagene Verfahren zum Ansteuern einer elektrischen Vakuumpumpe weiter verdeutlicht werden. Fig. 3 zeigt eine typische Kennlinie eines Bremskraftverstärkersystems an. Die X-Achse gibt dabei die Pedalkraft F_{Pedal} an. Auf der Y-Achse wird der Bremsdruck P_{B} angegeben.

Ab einer minimalen Pedalkraft F₀ steigt der Bremsdruck P_{B} nach einem kurzen anfänglichen sprunghaften Anstieg innerhalb eines Bereichs 17 linear bis zu einem Aussteuerpunkt 15 an. Die Steigung dieses Anstiegs gibt ein Maß für die Verstärkungswirkung des Bremskraftverstärkers an.

Oberhalb des Aussteuerpunkts 15 kann der Bremskraftverstärker nicht mehr zur Erhöhung des Bremsdrucks beitragen, so dass sich bei einer weiteren Erhöhung der Pedalkraft F_{Pedal} der Bremsdruck P_{B} schwächer erhöht als im verstärkten Bereich 17 bis zum Aussteuerpunkt 15.

Für den praktischen Einsatz wird angestrebt, dass sich das Bremssystem immer innerhalb des verstärkenden Bereichs 17 der Kennlinie, das heißt unterhalb des Aussteuerpunkts 15 bewegt. Die Lage des Aussteuerpunkts 15 hängt jedoch stark von dem innerhalb des Vakuumreservoirs herrschenden Unterdruck ab. Je größer dieser Unterdruck ist, umso länger bzw. bis zu umso höheren Bremsdrücken kann der Bremskraftverstärker eine Bremspedalbetätigung unterstützen. In Fig. 3 sind hierzu beispielhaft gestrichelte Linien eingezeichnet, die von oben nach unten eine Veränderung der Kennlinie des Bremskraftverstärkers bei zunehmend geringerem Unterdruck in dem Vakuumreservoir darstellen. Es ist ersichtlich, dass der Aussteuerpunkt 15''' für den Fall (c) geringsten Unterdrucks in dem Vakuumreservoir beispielsweise wesentlich niedriger liegt als für den Fall (a) wesentlich höheren Unterdrucks.

Der Bereich I gibt nun diejenigen Fälle an, bei denen der aktuell in dem Vakuumreservoir herrschende Unterdruck abzüglich der abgeschätzten Unterdruckabnahme während des Bremsvorgangs groß genug ist, damit der mindestens zu erreichende Zielbremsdruck unterhalb des Aussteuerpunktes 15 bleibt. Für diese Fälle I kann eine Einschaltschwelle für die elektrische Vakuumpumpe temporär reduziert werden, so dass während des aktuellen Bremsvorgangs die Vakuumpumpe nicht plötzlich aktiviert wird und sich somit das Bremspedalgefühl für den Fahrer ändert. Es bleibt gewährleistet, dass ausreichend Unterdruck in dem Vakuumreservoir herrscht, dass für den gesamten Bremsvorgang bis hin zum Zielbremsdruck eine Unterstützung durch den Bremskraftverstärker eintritt und somit der Aussteuerpunkt nicht erreicht wird.

Für Fälle II, in denen der aktuell herrschende Unterdruck in dem Vakuumreservoir nicht ausreicht, um die während des Bremsvorgangs auftretende Unterdruckabnahme auszugleichen, ohne unter den Aussteuerpunktunterdruck zu sinken, wird die Einschaltschwelle für die Vakuumpumpe nicht reduziert.

Abschließend wird angemerkt, dass die Wirksamkeit des vorgeschlagenen Verfahrens unter Verwendung einer sogenannten Overboost-Funktion, bei der ein zusätzlicher Druckaufbau durch ein ESP-System (elektronisches Stabilisierungsprogramm) bewirkt werden kann, um den Aussteuerpunkt quasi virtuell zu verschieben, verbessert werden kann. Dabei kann die Mindestverzögerung bzw. der angestrebte Zielbremsdruck reduziert werden.

## Patentansprüche

1. Verfahren zum Ansteuern einer elektrischen Vakuumpumpe (5) für einen Bremskraftverstärker (3) eines Fahrzeugs, wobei der Bremskraftverstärker (3) von einem Vakuumreservoir (9) mit Unterdruck versorgt wird und die Vakuumpumpe (5) dazu ausgelegt ist, den Unterdruck in dem Vakuumreservoir (9) zu erhöhen, sobald der Unterdruck unter eine vorgebbare Einschaltschwelle absinkt,
**dadurch gekennzeichnet, dass** das Verfahren die folgenden Schritte aufweist:
Abschätzen einer voraussichtlichen Abnahme ΔP_{U} des Unterdrucks in dem Vakuumreservoir aufgrund eines aktuellen Bremsvorgangs, und
temporäres Reduzieren der Einschaltschwelle P_{S_temp}, falls der aktuell in dem Vakuumreservoir herrschende Unterdruck P_{U_aktuell} abzüglich der abgeschätzten Unterdruckabnahme ΔP_{U} größer als ein vorbestimmter Aussteuerpunktunterdruck ist P_{A}.

2. Verfahren nach Anspruch 1, wobei das Verfahren die folgenden Teilschritte aufweist:
Ermitteln einer Druckdifferenz AP_{B} zwischen einem Zielbremsdruck P_{B_Ziel} und einem aktuellen Vorbremsdruck P_{B-aktuell} in dem Bremskraftverstärker (3);
Abschätzen der Abnahme des Unterdrucks Δ_{PU} in dem Vakuumreservoir (9) basierend auf der ermittelten Druckdifferenz ΔP_{B} und dem aktuellen Unterdruck P_{U_aktuell} in dem Vakuumreservoir (9).

3. Verfahren nach Anspruch 2, wobei die Abnahme des Unterdrucks Δ_{PU} in dem Vakuumreservoir (9) mit Hilfe eines Kennfeldes, welches eine Unterdruckabnahme ΔP_{U} in Abhängigkeit von der ermittelten Druckdifferenz ΔP_{B} und dem aktuellen Vorbremsdruck P_{B-aktuell} in dem Bremskraftverstärker (3) angibt, ermittelt wird.

4. Verfahren nach Anspruch 2, wobei die Abnahme des Unterdrucks ΔP_{U} in dem Vakuumreservoir (9) als proportional zu der ermittelten Druckdifferenz ΔP_{B} ermittelt wird.

5. Verfahren nach Anspruch 2, wobei die Abnahme des Unterdrucks ΔP_{U} in dem Vakuumreservoir (9) durch Extrapolation einer bereits gemessenen Unterdruckabnahme ermittelt wird.

6. Verfahren nach einem der vorangehenden Ansprüche, wobei ein Ausmaß ΔP_{S} des temporären Reduzierens der Einschaltschwelle AP_{B_temp} abhängig von der geschätzten voraussichtlichen Abnahme ΔP_{U} des Unterdrucks in dem Vakuumreservoir (9) aufgrund eines aktuellen Bremsvorgangs und abhängig von dem aktuellen Unterdruck ΔP_{U_aktuell} in dem Vakuumreservoir (9) gewählt wird.

7. Verfahren nach einem der vorangehenden Ansprüche, wobei der Aussteuerpunktunterdruck P_{A} als minimaler Unterdruck in dem Vakuumreservoir (9) definiert ist, oberhalb dessen der Unterdruck in dem Vakuumreservoir (9) ausreicht, um einer Bremspedalbetätigung mit Hilfe des Bremskraftverstärkers (3) zu unterstützen.

8. Vorrichtung (11) zum Ansteuern einer elektrischen Vakuumpumpe (5) für einen Bremskraftverstärker (3) eines Fahrzeugs, wobei der Bremskraftverstärker (3) von einem Vakuumreservoir (9) mit Unterdruck versorgt wird und die Vakuumpumpe (5) dazu ausgelegt ist, den Unterdruck in dem Vakuumreservoir (3) zu erhöhen, sobald der Unterdruck unter eine vorgebbare Einschaltschwelle P_{S_temp} absinkt,
**dadurch gekennzeichnet, dass** die Vorrichtung (11) dazu ausgelegt ist, ein Verfahren gemäß einem der Ansprüche 1 bis 7 durchzuführen.

9. Computerprogrammprodukt mit maschinenlesbarem Code, **dadurch gekennzeichnet, dass** der maschinenlesbare Code eine Maschine dazu ansteuert, ein Verfahren gemäß einem der Ansprüche 1 bis 7 durchzuführen.

10. Computerlesbares Medium mit einem darauf gespeicherten Computerprogrammprodukt gemäß Anspruch 9.

## Claims

1. Method for actuating an electric vacuum pump (5) for a brake booster (3) of a vehicle, the brake booster (3) being supplied with vacuum from a vacuum reservoir (9), and the vacuum pump (5) being designed to increase the vacuum in the vacuum reservoir (9) as soon as the vacuum drops below a predefinable switch-on threshold, **characterized in that** the method has the following steps:
estimation of an expected decrease ΔP_{U} of the vacuum in the vacuum reservoir on account of a current braking operation, and
temporary reduction of the switch-on threshold P_{S_temp} if the vacuum P_{U_current} which currently prevails in the vacuum reservoir minus the estimated vacuum decrease ΔP_{U} is greater than a predefined run-out point vacuum P_{A}.

2. Method according to Claim 1, the method having the following part steps:
determination of a pressure difference ΔP_{B} between a target brake pressure P_{B_target} and a current pilot braking pressure P_{B-current} in the brake booster (3) ;
estimation of the decrease of the vacuum ΔP_{U} in the vacuum reservoir (9) based on the determined pressure difference ΔP_{B} and the current vacuum P_{U_current} in the vacuum reservoir (9).

3. Method according to Claim 2, the decrease of the pressure ΔP_{U} in the vacuum reservoir (9) being determined with the aid of a characteristic diagram which specifies a vacuum decrease ΔP_{U} as a function of the determined pressure difference ΔP_{B} and the current pilot braking pressure P_{B-current} in the brake booster (3).

4. Method according to Claim 2, the decrease of the vacuum ΔP_{U} in the vacuum reservoir (9) being determined as proportional to the determined pressure difference ΔP_{B}.

5. Method according to Claim 2, the decrease of the vacuum ΔP_{U} in the vacuum reservoir (9) being determined by way of extrapolation of a vacuum decrease which has already been measured.

6. Method according to one of the preceding claims, an extent ΔP_{S} of the temporary reduction of the switch-on threshold ΔP_{S_temp} being selected in a manner which is dependent on the estimated expected decrease ΔP_{U} of the vacuum in the vacuum reservoir (9) on account of the current braking operation and a manner which is dependent on the current vacuum ΔP_{U_current} in the vacuum reservoir (9).

7. Method according to one of the preceding claims, the run-out point vacuum P_{A} being defined as a minimum vacuum in the vacuum reservoir (9), above which the vacuum in the vacuum reservoir (9) is sufficient, in order to assist a brake pedal actuation with the aid of the brake booster (3).

8. Apparatus (11) for actuating an electric vacuum pump (5) for a brake booster (3) of a vehicle, the brake booster (3) being supplied with vacuum from a vacuum reservoir (9), and the vacuum pump (5) being designed to increase the vacuum in the vacuum reservoir (3) as soon as the vacuum drops below a predefinable switch-on threshold P_{S_temp}, **characterised in that** the apparatus (11) is designed to carry out a method according to one of Claims 1 to 7.

9. Computer program product with machine-readable code, **characterized in that** the machine-readable code actuates a machine to carry out a method according to one of Claims 1 to 7.

10. Computer-readable medium having a computer program product according to Claim 9 stored on it.

## Revendications

1. Procédé pour commander une pompe à vide électrique (5) pour un servofrein (3) d'un véhicule, dans lequel le servofrein (3) est alimenté en dépression depuis un réservoir de vide (9) et la pompe à vide (5) est conçue de manière à augmenter la dépression dans le réservoir de vide (9) dès que la dépression descend en dessous d'un seuil d'enclenchement prédéfinissable,
**caractérisé en ce que** le procédé présente les étapes suivantes :
estimation d'une diminution probable ΔP_{U} de la dépression dans le réservoir de vide sur la base d'une opération de freinage actuelle, et
réduction temporaire du seuil d'enclenchement P_{S_temp} si la dépression P_{U_aktuell} régnant actuellement dans le réservoir de vide, moins la diminution estimée ΔP_{U}, est supérieure à une dépression de point de réglage prédéterminée P_{A}.

2. Procédé selon la revendication 1, dans lequel le procédé présente les étapes partielles suivantes :
détermination d'une différence de pression ΔP_{B} entre une pression de freinage cible P_{B_Ziel} et une pression de freinage pilote actuelle P_{B-aktuell} dans le servofrein (3) ;
estimation de la diminution de la dépression ΔP_{U} dans le réservoir de vide (9) sur la base de la différence de pression déterminée ΔP_{B} et de la dépression actuelle P_{U_aktuell} dans le réservoir de vide (9).

3. Procédé selon la revendication 2, dans lequel la diminution de la dépression ΔP_{U} dans le réservoir de vide (9) est déterminée à l'aide d'un champ caractéristique qui indique une diminution de dépression ΔP_{U} en fonction de la différence de pression déterminée ΔP_{B} et de la pression de freinage pilote actuelle P_{B-aktuell} dans le servofrein (3).

4. Procédé selon la revendication 2, dans lequel la diminution de la dépression ΔP_{U} dans le réservoir de vide (9) est déterminée comme étant proportionnelle à la différence de pression déterminée ΔP_{B}.

5. Procédé selon la revendication 2, dans lequel la diminution de la dépression ΔP_{U} dans le réservoir de vide (9) est déterminée par extrapolation d'une diminution de dépression déjà mesurée.

6. Procédé selon l'une quelconque des revendications précédentes, dans lequel on sélectionne une mesure ΔP_{S} de la réduction temporaire du seuil d'enclenchement ΔP_{B_temp} en fonction de la diminution probable estimée ΔP_{U} de la dépression dans le réservoir de vide (9) sur la base d'une opération de freinage actuelle et en fonction de la dépression actuelle ΔP_{U_aktuell} dans le réservoir de vide (9).

7. Procédé selon l'une quelconque des revendications précédentes, dans lequel la dépression de point de réglage P_{A} est définie comme étant la dépression minimale dans le réservoir de vide (9), au-dessus de laquelle la dépression dans le réservoir de vide (9) suffit à supporter un actionnement de la pédale de frein à l'aide du servofrein (3).

8. Dispositif (11) pour commander une pompe à vide électrique (5) pour un servofrein (3) d'un véhicule, le servofrein (3) étant alimenté en dépression depuis un réservoir de vide (9) et la pompe à vide (5) étant conçue pour augmenter la dépression dans le réservoir de vide (3) dès que la dépression descend en dessous d'un seuil d'enclenchement prédéfinissable P_{S_temp},
**caractérisé en ce que** le dispositif (11) est conçu pour mettre en oeuvre un procédé selon l'une quelconque des revendications 1 à 7.

9. Produit de programme informatique à code lisible en machine, **caractérisé en ce que** le code lisible en machine commande une machine de manière à mettre en oeuvre un procédé selon l'une quelconque des revendications 1 à 7.

10. Support lisible par ordinateur comprenant un produit de programme informatique mémorisé sur celui-ci selon la revendication 9.
